Europäisches Patentamt

European Patent Office

Office européen des brevets

(11) Veröffentlichungsnummer: **0 179 966**
A1

# EUROPÄISCHE PATENTANMELDUNG

(21) Anmeldenummer: 84890200.3

(22) Anmeldetag: 30.10.84

(51) Int. Cl.⁴: **F 16 L 5/02,** H 02 G 3/22

(43) Veröffentlichungstag der Anmeldung: 07.05.86
Patentblatt 86/19

(71) Anmelder: **Laha, Manfred, Untere Donaustrasse 31,
A-1020 Wien (AT)**

(84) Benannte Vertragsstaaten: **BE CH DE FR GB IT LI LU NL
SE**

(72) Erfinder: **Laha, Manfred, Untere Donaustrasse 31,
A-1020 Wien (AT)**

(54) Schachtfutterrohr.

(57) Die Erfindung betrifft ein Schachtfutterrohr (1) aus duroplastischem Material, dessen Außenmantel eine Aufrauhung in Form einer Körnung (3) aufweist. Solche erfindungsgemäßen Rohre werden zum Durchführen von Rohrleitungen oder Kabeln durch die Wände von Bauwerken od. dgl.
eingesetzt und erfüllen dabei die heutzutage gestellten Anforderungen an Bruchsicherheit einerseits und Dichtheit
gegenüber der Bauwerkswand anderseits. Als besonders
günstig hat sich für die Körnung (3) ein Korndurchmesser
von 1–3 mm erwiesen bzw. die Integrierung der vorzugsweise unregelmäßigen Körnung (3) in das Material des Rohres
(1).

## Schachtfutterrohr

Die Erfindung bezieht sich auf ein Schachtfutterrohr aus Kunststoff zum Durchführen von Rohrleitungen oder Kabeln durch die Wände von Bauwerken od. dgl., dessen Außenmantel mit einer Aufrauhung versehen ist.

Es sind solche Futterrohre aus thermoplastischen Kunststoffen bekannt, bei denen die Aufrauhung aus einem über die ganze Rohrlänge durchlaufenden und zur Aufnahme einer zugeordneten Verbindungsmuffe oder Endkappe geeigneten Außengewinde besteht.

Weiterhin ist es bekannt, Futterrohre aus duroplastischen Materialien herzustellen, jedoch mit glattem Außenmantel.

Aus der DE-OS 22 33 211 ist eine Wanddichtung aus verformbaren, gut gleitendem Kunststoff für Rohr- oder Kabeldurchführungen bekannt, bestehend aus einem Dichtungssteg mit deren angebrachten Lippen und mit beweglichen Gliedern mit Nuten und/oder Falten zum Ausgleich der Dickenschwankungen der Trennwand.

Die bisher bekannten Ausführungen genügen, wie sich erwiesen hat, nicht den heutzutage gestellten Anforderungen an Bruchsicherheit einerseits und Dichtheit gegenüber der Bauwerkswand anderseits.

Die Erfindung stellt sich die Aufgabe, ein Schachtfutterrohr der eingangs genannten Art herzustellen, das den vorgenannten Anforderungen voll entspricht.

Erfindungsgemäß ist vorgesehen, daß das Rohr aus duroplastischem Material besteht und daß die Aufrauhung in Form einer Körnung, vorzugsweise mit einem Korndurchmesser von 1 bis 3 mm, ausgebildet ist.

In dieser Weise erhält man ein Rohr, das hohe Bruchsicherheit bei ausreichender Elastizität einerseits und zufolge der außenmantelseitigen Körnung eine hohe Dichtheit gegenüber der Bauwerkswand aufweist.

Ein weiteres Merkmal der Erfindung ist, daß die vorzugsweise unregelmäßige Körnung in das Material des Rohres integriert ist.

Ein solches Rohr läßt sich in einem einzigen Verfahrensschritt spritzgießen, z. B. aus PU-Duroplasten, Phenoplasten, Aminoplasten oder ungesättigten Polyesterharzen.

Schließlich sieht die Erfindung vor, daß es außenseitig, wie an sich bekannt, mit mindestens einer Ringnut versehen ist. So wird eine besonders gute Verankerung des Rohres in der Wand des Bauwerkes erreicht.

Ferner ist erfindungsgemäß vorgesehen, daß am Rohrumfang mindestens eine, bevorzugt glatte Schneidenut vorgesehen ist. Dies ermöglicht eine leichte Ablängung bei anderen Futterrohrdimensionen.

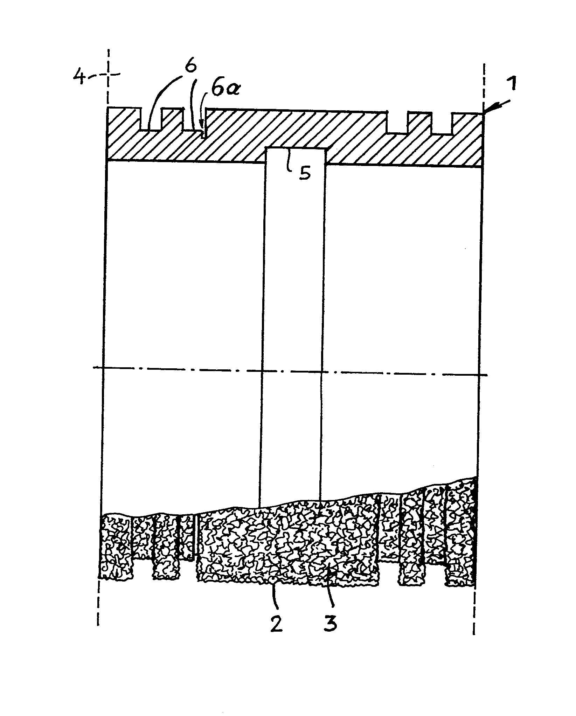

Eine beispielhafte Ausführungsform der Erfindung wird anhand der Zeichnung näher erläutert; diese zeigt einen axialen Längsschnitt im oberen Bereich und die zugehörige Seitenansicht im unteren Bereich.

Wie erkenntlich, weist das Rohr 1, das aus duroplastischem Material besteht, an seinem Außenmantel 2 eine unregelmäßige, körnige Oberfläche 3 auf; diese ermöglicht es, daß ein Mörtel oder der Beton des umgebenden (strichliert angedeuteten) Bauwerkes 4 od. dgl. sich mit höchster Dichtigkeit und Festigkeit mit diesem die Körnung 3 aufweisenden Außenmantel 2 des Rohres 1 zu verbinden imstande ist.

Das Rohr 1 weist in üblicher Weise in der Mitte seiner Innenwand eine oder mehrere Ringnuten 5 auf, die einen (nicht dargestellten) Dichtungsring aufzunehmen imstande sind, der sich dichtend an das (nicht dargestellte) Kabel, die Rohrleitung od. dgl. abstützt, das bzw. die durch das Rohr 1 und damit das Bauwerk 4 hindurchgeführt werden soll.

Die Körnung 3 weist zweckmäßig einen Konrdurchmesser von 1 - 3 mm auf. Sie besteht zweckmäßig mit dem Rohr 1 aus demselben Material, und ihre Kornstruktur ist durch Schaumguß desselben dann in einer mehrteiligen Form herstellbar. Es wäre aber auch möglich, die Körnung durch Einzelkornaufbringung, z. B. aus mineralischen Werkstoffen, z. B. Sand, herzustellen und mit dem Rohrmantel zu verbinden, z. B. durch Klebung oder durch Auftragen auf die erweichte Außenfläche des Rohrmantels 2.

Der Außenmantel 2 kann ferner mit einer oder mehreren, beim dargestellten Ausführungsbeispiel vier äußeren Ringnuten 6 und/oder Scheidenuten 6a versehen sein, die eine zusätzliche sichere Verankerung im Bauwerk 4 ergeben, bzw. eine Anpassung des Rohrstutzens an die Länge der jeweiligen Durchführung ermöglichen.

Im Rahmen der Erfindung sind Abänderungen an dem beschriebenen Ausführungsbeispiel möglich. So könnte die Kornstruktur 3 an dem Mantel 2 des Rohres 1 auch eine gleichmäßige sein und z. B. aus Kalotten, Pyramiden, Kegelstümpfen od. dgl. bestehen.

Patentansprüche:

1. Schachtfutterrohr aus Kunststoff zum Durchführen von Rohrleitungen oder Kabeln durch die Wände von Bauwerken od. dgl., dessen Außenmantel mit einer Aufrauhung versehen ist, dadurch gekennzeichnet, daß das Rohr (1) aus duroplastischem Material besteht und daß die Aufrauhung in Form einer Körnung (3), vorzugsweise mit einem Korndurchmesser von 1 - 3 mm, ausgebildet ist.

2. Rohr nach Anspruch 1, dadurch gekennzeichnet, daß die vorzugsweise unregelmäßige Körnung in das Material des Rohres (1) integriert ist.

3. Rohr nach Anspruch 1 oder 2, dadurch gekennzeichnet, daß es außenseitig, wie an sich bekannt, mit midestens einer Ringnut (6) versehen ist.

4. Rohr nach einem der Ansprüche 1 bis 3, dadurch gekennzeichnet, daß am Rohrumfang mindestens eine, bevorzugt glatte Schneidenut (6a) vorgesehen ist.

Europäisches
Patentamt

**EUROPÄISCHER RECHERCHENBERICHT**

Nummer der Anmeldung

EP 84 89 0200

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-1 801 903 (ODENWALD-CHEMIE) * Seite 8, Zeile 7 - Seite 9, Zeile 6; Seite 14, Zeilen 6-17; Ansprüche 6-8; Figur 5 * | 1,2 | F 16 L 5/02 H 02 G 3/22 |
| | --- | | |
| X | DE-A-2 615 428 (T.CORDES) * Ansprüche 1-3 * | 1 | |
| | --- | | |
| A | DE-A-1 806 914 (ISTAG AG) * Ansprüche 1,5; Figuren 2a,2b * | 1,3 | |
| | --- | | |
| A | DE-A-2 310 691 (W.HAUFF) * Ansprüche 1,3; Figur 2 * | 1 | |
| | ----- | | |

RECHERCHIERTE SACHGEBIETE (Int. Cl.4)

F 16 L

Der vorliegende Recherchenbericht wurde für alle Patentansprüche erstellt.

| Recherchenort DEN HAAG | Abschlußdatum der Recherche 01-07-1985 | Prüfer SCHAEFFLER C.A.A. |
|---|---|---|